# EUROPEAN PATENT APPLICATION

(11) **EP 4 711 956 A1**
(43) Date of publication of application: **18.03.2026**
(21) Application number: 25200198.7
(22) Date of filing: 04.09.2025
(51) Int. Cl.: G06F 21/31

(54) **SYSTEMS AND METHODS FOR CUSTOMER REAL TIME VERIFICATION TO REDUCE FRAUD OVER VIRTUAL BANKING CHANNEL**

(30) Priority: 11.09.2024 US 202418882524
(71) Applicant: JPMorgan Chase Bank, N.A., New York, NY 10179 (US)
(72) Inventor: More, Bipin, 383 Madison Avenue, 10179 (US); Ahuja, Dipti, 383 Madison Avenue, 10179 (US); Banala, Sandeep Reddy, 383 Madison Avenue, 10179 (US); Shorrosh, Maurice, 383 Madison Avenue, 10179 (US); Rather, Noman I, 383 Madison Avenue, 10179 (US)
(74) Representative: Patentanwälte Olbricht Buchhold Keulertz

(57) **Abstract**

Methods and systems consistent with the disclosure include a method for secure transfer using digital channels, comprising: receiving, by a platform executed by one or more processors of a server, a notification of a customer call, wherein the notification comprises an incoming phone call from a user; initiating a customer assist instance responsive to the notification; determining whether to ask the user for a document scan based on whether a user's device is known by the platform; sending, based on a determination that authorization is required, an event to the user's device with a unique scan session; receiving a scanned document from a user's device via use of the unique scan session; and determining, based on the scanned document, to allow a transaction.

## Description

### BACKGROUND OF THE INVENTION

### 1. Field Of The Invention

Embodiments generally relate to systems and methods for secure data transfer over digital channels.

### 2. Description of the Related Art

Current virtual chat bots have limitations in sending and receiving information to users over secure channels. Chat bots typically pass the transfer of such information to human counterparts, making the interaction with the chat bot inefficient or redundant. There is a need for improved virtual credential systems that reduce or eliminate the reliance on such redundant systems and human intervention by providing a secure process for identification and interaction.

### SUMMARY OF THE INVENTION

Methods and systems consistent with the disclosure include a method for secure transfer using digital channels, comprising: receiving, by a platform executed by one or more processors of a server, a notification of a customer call, wherein the notification comprises an incoming phone call from a user; initiating a customer assist instance responsive to the notification; determining whether to ask the user for a document scan based on whether a user's device is known by the platform; sending, based on a determination that authorization is required, an event to the user's device with a unique scan session; receiving a scanned document from a user's device via use of the unique scan session; and determining, based on the scanned document, to allow a transaction.

The method may further comprise determining whether to rechallenge the user based on an additional authorization rule. In some embodiments, the unique scan session may be available during a period of time of the event. In some embodiments, the determination of authorization may be based on whether the user has an account with an institution providing a backend for the platform. The method may further comprise generating a score may be based on legibility of the scanned document, a quality of the scanned document, and an appropriate place and a length of each identifier of the scanned document, wherein the determination to allow the transaction is based on the score exceeding a threshold. The method may further comprise initiating the unique scan session based on determining that the user's device is a trusted device. The method may further comprise initiating the unique scan session based on determining that the user's device is logged into a user's account.

In some embodiments, a computer processing system may include a memory configured to store instructions; and a hardware processor operatively coupled to the memory for executing the instructions consistent with a method disclosed herein. In some embodiments, a non-transitory computer readable storage medium, including instructions stored thereon, which when read and executed by one or more computer processors, may cause the one or more computer processors to perform steps consistent with a method disclosed herein.

### BRIEF DESCRIPTION OF THE DRAWINGS

In order to facilitate a fuller understanding of the present invention, reference is now made to the attached drawings. The drawings should not be construed as limiting the present invention but are intended only to illustrate different aspects and embodiments.
Figure 1 illustrates a system for secure data transfer over digital channels according to an embodiment.
Figure 2 illustrates a method for secure data transfer over digital channels according to an embodiment.
Figure 3 illustrates an exemplary computing system for implementing aspects of the present disclosure.

### DETAILED DESCRIPTION OF PREFERRED EMBODIMENTS

Embodiments are directed to systems and methods for secure data transfer over digital channels.

Embodiments may include receiving a notification of a customer call. The notification can be an incoming phone call or chat receipt (e.g., SMS, webchat). For example, for a financial institution, the customer call may be a banking appointment.

Embodiments may include a platform initiating a customer assist instance responsive to the notification. The instance may be a virtual bank instance. The instance can select a customer account based on a receipt of a phone number, caller identification, and/or login information of a user. In some embodiments, the user may be required to login to an account. In some embodiments, the instance can automatically confirm the customer's phone and/or email address by comparing an input against a database.

Embodiments can include determining whether to ask the user for a document scan based on whether the user's mobile device is known by the platform (e.g., associated with an account of the user, has previously been used to access an account of the user). In some embodiments, a secure access API can be called by the platform. The platform can decide to require a document based on a determination that the mobile device is unknown.

Embodiments may include the platform entering into the customer assist instance flow that authorization is required. The platform can initiate a secure transaction in response. The authorization can include a challenge as a service ("Caas") authorization.

Embodiments include the platform sending an event or an initiation to the user to provide the user with a unique scan session. The scan session can be received as a mobile application. The scan session can include access to a user device's camera and associated memory for receipt of photos. The scan session may be available for a period of time to further reduce unauthorized access.

Embodiments include a notification sent to the user to use the scan session to trigger a scan. The scan can include a driver license scan or other personal identification document (e.g., passport).

Embodiments include the user sending the scan to a verifying identification as a service platform. The verifying identification as a service platform can score the identification document. The score can be based on legibility, quality of the scan, and/or appropriate place and length of each identifier.

Embodiments, include the platform determining whether to present identification results or to rechallenge based on additional authorization rules (e.g., providing a second identification document, verifying through an out-of-band communication).

Embodiments include the platform determining whether to allow a transaction based on an updated risk level for a duration with the user. The risk level can be raised if additional authorization rules are required.

Embodiments include the document status being published to the platform (e.g., for monitoring) and/or the user. Embodiments include auditing, reporting, and/or identity proofing based on the document.

Embodiments include the platform opening a new account or accessing an existing account. Benefits include real time document verification and real-time fraud prevention including setting alerts for account where an access attempt failed and/or false documentation is uploaded. Alerts may be sent to management personnel, highlighting each failure of the access attempt.

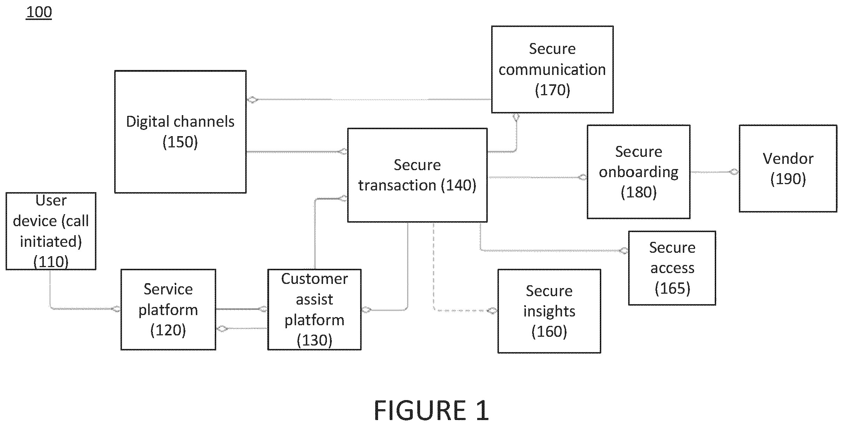

Referring to Figure 1, a secure data transfer system 100 for secure data transfer over digital channels is illustrated according to an embodiment.

System 100 may include a user device 110 where a call is initiated. The call can be a phone such as a mobile device or landline-based phone. The call can be on a mobile device or computer through an internet service.

System 100 can include a service platform 120 that receives and routes the call. Service platform 120 can include voice or text responses to user inquiries. Service platform 120 can send and receive data from the user device. Service platform 120 can select a customer account and/or confirm phone and/or email. Service platform 120 can receive a completed message from the customer assist platform 130 when the account is verified. Service platform 120 can send or provide vocal confirmation to the user of the result of the verification and/or related transaction (e.g., opening an account).

Customer assist platform 130 may receive the customer account selection from the platform 120. Customer assist platform 130 may send select customer information to a secure transaction model 140 for authentication. Customer assist platform 130 may receive identification results or a determination to rechallenge from the secure transaction model 140.

Secure transaction model 140 may include card as a service verification. Secure transaction model 140 can initiate a document scan process through secure communication 170. Secure communication 170 may send a banner (e.g., through SMS or weblink) to the user for processing by the user's device. For example, secure communication 170 may include sending a nudge through a secure communication. In some embodiments, secure communication 170 may include an in-app pull notification through an in-app pull notification system, a push notification, and a SMS link through secure communication. In some embodiments, the user may select the banner to open an application in the user's device or a different user device through digital channels 150. The banner may lead to a link where a user can scan a document such as a driver's license.

Digital channels 150 may return a scanned document to the secure transfer model 140.

Secure transaction model 140 may transfer information from the scanned document and/or the entire scanned document to a secure onboarding platform 180. Secure onboarding platform 180 can include an identification verification as a service process.

Secure onboarding platform 180 can include or communicate with a vendor 190 for scoring of the scanned document.

Secure transaction model 140 may report results of the scoring to secure insights 160. Secure insights 160 can be used to improve scoring and/or record a user device and/or account or other identifying information of a fraud attempt. Secure transaction model 140 may report the scoring result to customer assist platform 130 to potentially re-challenge the user based on additional authentication rules. If a score is low, for example below a threshold, customer assist platform 130 may reject an access attempt for a time period or flag a device as suspicious.

Secure transaction model 140 may provide an approval for secure access 165. Secure access 165 may allow account access, for example to withdraw, add, or transfer funds of an access account. The access account may be a financial account, a user account, an asset account, or a blockchain account.

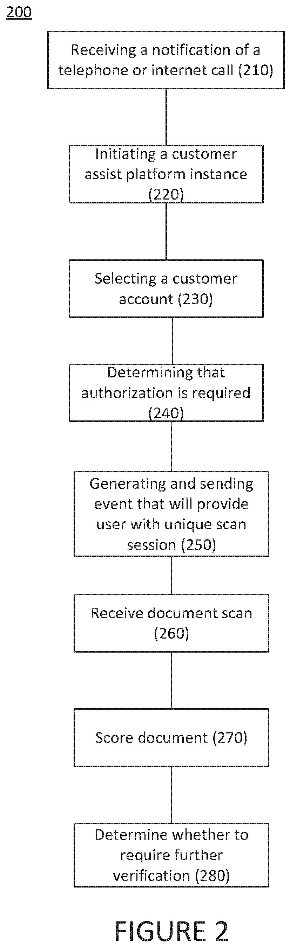

Referring to Figure 2, a method 200 for secure data transfer over digital channels is disclosed according to an embodiment.

Method 200 may include one or more steps including step 210. In step 210, a notification of a customer call may be received by a platform. The platform may be an application accessible through a user's electronic communication device and connected to a backend hosted by a server or computer. The application may be a set of instructions executed by a processor of the user's electronic communication device. The backend may be a set of instructions executed by a processor of a server or computer.

The notification may be an incoming phone call or chat receipt (e.g., SMS, webchat). The notification may be of a pre-set appointment or could be set instantly through a customer's interaction with a chatbot, selection through a telephonic system, or website interface.

In step 220, the platform may initiate a customer assist instance responsive to the notification. The instance may be a virtual bank instance. The instance may select a customer account based on a receipt of a phone number, caller identification, and/or login information of a user. The instance may initiate a confirmation of the customer account by verifying the customer account against a database based on customer information. In some embodiments, the user may be required to login to an account. The platform may determine if the user is logged into the account, for example through a login monitor of a website or application, as another way to determine if the customer's access is authorized. In some embodiments, the instance may automatically confirm the customer's phone and/or email address by comparing an input against a database.

In step 230, the platform may determine that a document scan is required. The request for a document scan may be based on whether the user's mobile device is known by the platform (e.g., associated with an account of the user, has previously been used to access an account of the user). In some embodiments, the platform may use a secure access API to determine if the device is trusted or not. The platform may decide to require a document scan based on a determination that the mobile device is unknown.

In step 240, the platform may state in the customer assist instance flow that authorization is required. The platform may initiate a secure transaction in response to finding that authorization is required. The authorization may include a challenge as a service ("Caas") authorization. In some embodiments, a virtual banker will authenticate the customer in the platform. The Caas may initiate the document scan process through a secure communication or through an in-app pull notification.

In step 250, the platform may send an event or an initiation to the user to provide the user with a unique scan session. The scan session may be received as a mobile application. The scan session may be for a defined time period or appointment. The scan session may include access to a user device's camera and associated memory for receipt of photos. The unique scan session may be used only with the user's device and/or with a passcode.

In step 260, a notification may be sent to the user to use the scan session to trigger a scan. The scan may include a driver license scan or other personal identification document (e.g., passport). Step 260 may include the user sending the scan to a verifying identification as a service platform.

Step 270 may include scoring the identification document. The score may be based on legibility, quality of the scan, and/or appropriate place and length of each identifier.

Step 280 may include the platform determining whether to present identification results or to rechallenge based on additional authorization rules (e.g., providing a second document, verifying through an out-of-band communication). Step 280 may include the platform determining whether to allow a transaction based on an updated risk level for a duration with the user. The risk level may be raised if additional authorization rules are required.

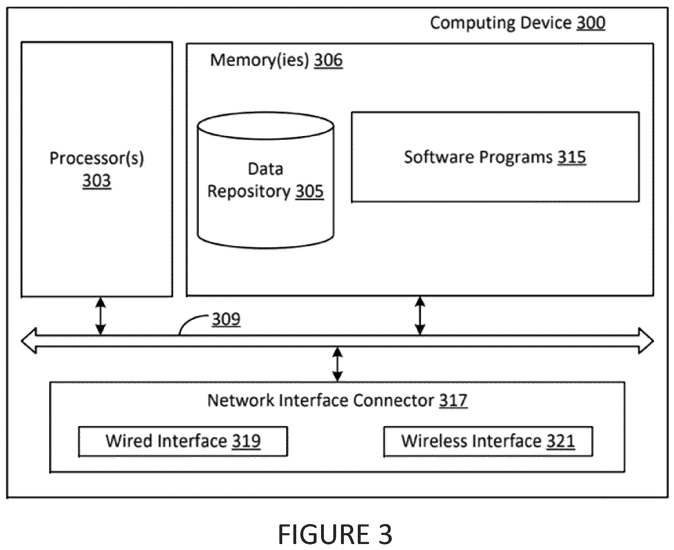

Figure 3 depicts an exemplary computing system for implementing aspects of the present disclosure. Figure 3 depicts exemplary computing device 300. Computing device 300 may represent the system components described herein. Computing device 300 may include processor 305 that may be coupled to memory 310. Memory 310 may include volatile memory. Processor 305 may execute computer-executable program code stored in memory 310, such as software programs 315. Software programs 315 may include one or more of the logical steps disclosed herein as a programmatic instruction, which may be executed by processor 305. Memory 310 may also include data repository 320, which may be nonvolatile memory for data persistence. Processor 305 and memory 310 may be coupled by bus 330. Bus 330 may also be coupled to one or more network interface connectors 340, such as wired network interface 342 or wireless network interface 344. Computing device 300 may also have user interface components, such as a screen for displaying graphical user interfaces and receiving input from the user, a mouse, a keyboard and/or other input/output components (not shown).

Although several embodiments have been disclosed, it should be recognized that these embodiments are not exclusive to each other, and features from one embodiment may be used with others.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method for secure transfer using digital channels, comprising:
receiving, by a platform executed by one or more processors of a server, a notification of a customer call, wherein the notification comprises an incoming phone call from a user;
initiating a customer assist instance responsive to the notification;
determining whether to ask the user for a document scan based on whether a user's device is known by the platform;
sending, based on a determination that authorization is required, an event to the user's device with a unique scan session;
receiving a scanned document from a user's device via use of the unique scan session; and
determining, based on the scanned document, to allow a transaction.

2. The method of claim 1, further comprising determining whether to rechallenge the user based on an additional authorization rule.

3. The method of claim 1, wherein the unique scan session is available during a period of time of the event.

4. The method of claim 1, wherein the determination of authorization is based on whether the user has an account with an institution providing a backend for the platform.

5. The method of claim 1, further comprising generating a score may be based on legibility of the scanned document, a quality of the scanned document, and an appropriate place and a length of each identifier of the scanned document, wherein the determination to allow the transaction is based on the score exceeding a threshold.

6. The method of claim 1, further comprising initiating the unique scan session based on determining that the user's device is a trusted device.

7. The method of claim 1, further comprising initiating the unique scan session based on determining that the user's device is logged into a user's account.

8. A computer processing system comprising:
a memory configured to store instructions; and
a hardware processor of a platform operatively coupled to the memory for executing the instructions to:
receive a notification of a banking appointment, wherein the notification comprises an incoming internet call from a user;
initiate a customer assist instance responsive to the notification;
determine whether to ask the user for a document scan based on whether a user's device is known to the platform;
send, based on determining authorization is required, an event to the user's device with a unique scan session;
receive a scanned document from the user's device; and
determine, based on the scanned document, to allow a transaction.

9. The system of claim 8, the instructions further comprising determining whether to rechallenge the user based on an additional authorization rule.

10. The system of claim 8, wherein the unique scan session is available during a period of time of the event.

11. The system of claim 8, wherein the determination of authorization is based on whether the user has an account with an institution providing a backend for the platform.

12. The system of claim 8, the instructions further comprising generating a score may be based on legibility of the scanned document, a quality of the scanned document, and an appropriate place and a length of each identifier of the scanned document, wherein the determination to allow the transaction is based on the score exceeding a threshold.

13. The system of claim 8, the instructions further comprising initiating the unique scan session based on determining that the user's device is a trusted device.

14. The system of claim 8, the instructions further comprising initiating the unique scan session based on determining that the user's device is logged into a user's account.

15. A non-transitory computer readable storage medium of a platform, including instructions stored thereon, which when read and executed by one or more computer processors, cause the one or more computer processors to perform steps comprising:
receiving a notification of a customer call, wherein the notification comprises an incoming phone call from a user;
initiating a customer assist instance responsive to the notification;
determining whether to ask the user for a document scan based on whether a user's device is known by the platform;
sending, based on determining authorization is required, an event to the user's device with a unique scan session;
receiving a scanned document from the user's device; and
determining, based on the scanned document, to allow a transaction.

16. The non-transitory computer readable storage medium of claim 8, the steps further comprising determining whether to rechallenge the user based on an additional authorization rule.

17. The non-transitory computer readable storage medium of claim 8, wherein the unique scan session is available during a period of time of the event.

18. The non-transitory computer readable storage medium of claim 8, wherein the determination of authorization is based on whether the user has an account with an institution providing a backend for the platform.

19. The non-transitory computer readable storage medium of claim 8, the steps further comprising generating a score may be based on legibility of the scanned document, a quality of the scanned document, and an appropriate place and a length of each identifier of the scanned document, wherein the determination to allow the transaction is based on the score exceeding a threshold.

20. The non-transitory computer readable storage medium of claim 8, the steps further comprising initiating the unique scan session based on determining that the user's device is a trusted device.
